# EUROPEAN PATENT APPLICATION

(11) **EP 2 239 682 A1**
(43) Date of publication of application: **13.10.2010**
(21) Application number: 09425133.7
(22) Date of filing: 07.04.2009
(51) Int. Cl.: G06K 7/00, G06K 17/00

(54) **System for document recognition through RFID technology**

(71) Applicant: Unione Consulenti Srl, 20122 Milano (IT)
(72) Inventor: The designation of the inventor has not yet been filed

(57) **Abstract**

The invention pertains to a radio frequency identification system that comprises: RFID tags that must be affixed on the documents of a papery archive, antennas equipped with luminous leds putted on the different sections of a bookshelf and readers RFID connected to a software for the tag search.

In the system in accordance to the present invention the recognition of a document is allowed by the lighting of the luminous led correspondent to the section in wich the document is located.

## Description

### TECHNICAL FIELD

The technical field of radio frequency identification (RFID), comprises readers that communicate with RFID tags.

Radio frequency identification (RFID) tags are electronic devices that may be affixed to items whose presence is to be detected and/or monitored. The presence of an RFID tag, and therefore the presence of the item to which the tag is affixed, may be checked and monitored wirelessly by devices known as "readers".

Readers typically have one or more antennas transmitting radio frequency signals to which tags respond.

In a RFID system, a reader transmits radio frequency (RF) signal to a tag. The tag receives the signal, and responds with a specific signal. The recognition of the signal, allow to detect a tag and the object on which it is applied.

Radio frequency identification technology is used in several fields, such as for example: time cards check, contrast of falsification and passports and documents identification, logistics, documents management and inventories.

RFID solutions until now implemented facilitates documents management in archives, e.g. allowing the monitoring of the handling: by means of suitable management database it is possible to process data of document handling, provided by RFID systems.

Indeed RFID tag is equipped with an electronic memory that is programmable with a code assigned by a catalog, allowing the recognition of it: the signal emitted by the tag is recognized by reader's antenna and is matched with the correspondent registration on the database.

Besides, these solutions survey presence and location of documents by means of the recognition of tags applied on them: each tag is equipped with an electronic memory for the documents identification data.

The solutions until now implemented don't allow an easy recognition of the precise location of a document (e.g. the precise folder in which is located the document) in case of this location isn't rigidly fixed: e.g. when documents are frequently substituted and the uptading of a classification database requires an excessive expenditure of time. Moreover, solutions until now implemented don't allow the recognition of the documents in case of human error: if the person that has taken the document to consult it, doesn't put it in the correct location, RFID systems until now implemented are just able to survey the absence of the same document.

Indeed in these systems, RFID antennas are used to recognize missing or out of place documents: these documents could be listed in the management database, with the correspondent data of identification and handling.

It is an aim of the present invention to allow the recognition of the documents in a paper archive apart from a classification system rigidly fixed.

Moreover it is an aim of the present invention to avoid that a human error when the documents are putted back in the archive, for example putted in the wrong folder, could close the door on the recognition of the same documents.

### DESCRIPTION

The invention object of the present patent application manages a paper archive by means of RFID tags fixed on the documents.

Moreover, in the system in accordance to the present invention, the signal emitted by RFID tags is picked up by antennas, located on the sections of a bookshelf, equipped with luminous leds: when a person seeks for a document, the light of the led on the correspondent section of the bookshelf is turned on.

Thanks to the present invention, to seek a document in an archive, an operator only have to send a serch order from the database on a computer to the RFID reader; this last searches the correspondent RFID tag.

In turn, the RFID tag send a signal, recognized by the antenna putted on section of the bookshelf in which the document is located.

After picking up the signal emitted by the RFID tag, the antenna on the section of the bookshelf in which the document is located, turns on its luminous led; the current required to the led is supplied by the same antenna, under power through electic current or battery.

In the same time, the antenna sends to the computer, by means of the reader, the pieces of information concerning the location of the document.

### DESCRIPTION OF DRAWINGS

Aspects and advantages of this invention will be clearer from the following explanatory but not restrictive description in order to enclosed plans in which:

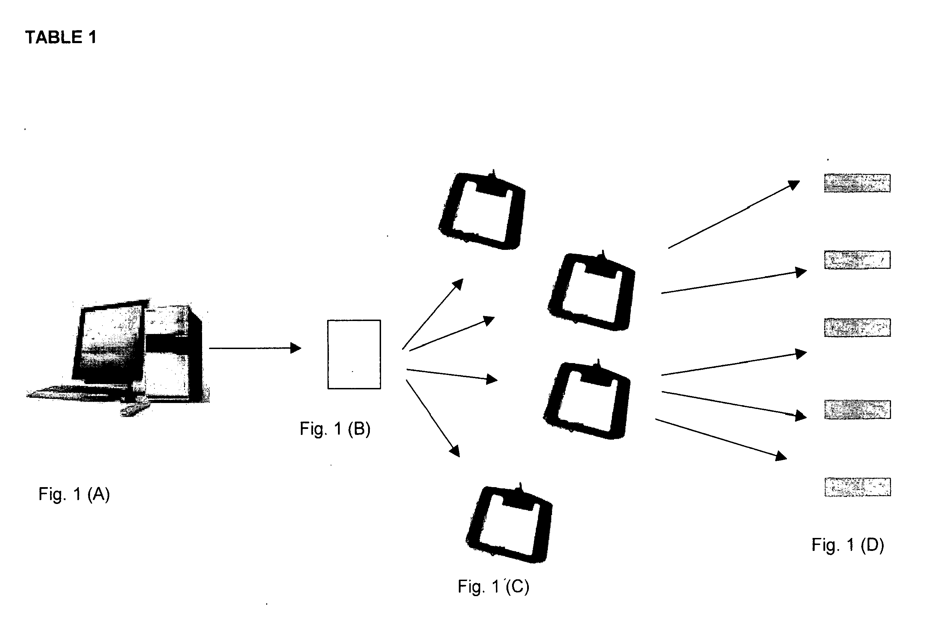

Fig. 1 shows the system object of the present invention in the phase of research; sending a search order from computer Fig. 1 (A) to the reader Fig. 1 (B), by means of the different antennas Fig. 1 (C), putted in the section of the bookshelf, the signal reaches the RFID tags Fig. 1 (D), fixed on the documents.

## Claims

1. System for document recognition through RFID technology, **characterized in that** it uses, for the recognition of the RFID tags putted on each document, antennas positioned on the section of a bookshelf in a papery archive and connected, through a reader, to a computer.

2. System for document recognition through RFID technology, **characterized in that** said antennas are equipped with luminous leds that are turned on to show the location of a document, after the receiving of the signal emitted by the corresponding RFID tag.

3. System for document recognition through RFID technology, **characterized in that** the antenna, conveniently codified, after the receiving of the answer by the RFID tag, transmit a signal through the reader to the management software, with the purpose of allowing the operator to see the location of the document by computer.
